# EUROPÄISCHE PATENTSCHRIFT

(11) **EP 1 930 091 B1**
(45) Veröffentlichungstag und Bekanntmachung des Hinweises auf die Patenterteilung: **29.12.2010**
(21) Anmeldenummer: 07018567.3
(22) Anmeldetag: 21.09.2007
(51) Int. Cl.: B08B 5/04, B08B 13/00, B01D 46/00

(54) **Absauggerät**
Suction device
Appareil d'aspiration

(30) Priorität: 06.12.2006 DE 202006018457 U
(43) Veröffentlichungstag der Anmeldung: 11.06.2008
(73) Patentinhaber: TBH GmbH, 75334 Straubenhardt (DE)
(72) Erfinder: Hartmann, Udo, 75305 Neuenbürg (DE)
(74) Vertreter: Durm, Frank

(56) Entgegenhaltungen:
- US-A- 4 450 964
- US-A- 5 837 040
- US-A1- 2007 214 961

## Beschreibung

Die vorliegende Erfindung betrifft ein Absauggerät zum Absaugen von Schadstoffpartikeln aus der Luft, mit einem Sauggebläse, einem Saugrohr und einer auswechselbaren Filterkassette, die einen Lufteinlass, eine Luftauslassöffnung und einen Filter aufweist.

An vielen Arbeitsplätzen gibt es Staub oder andere Partikel, die rasch und zuverlässig entfernt werden müssen, um sowohl die Menschen, die in dieser Umgebung arbeiten, als auch den technischen Prozess oder Fertigungsvorgang vor den Schadstoffpartikeln zu schützen. Hierfür werden spezielle leistungsfähige Absauggeräte eingesetzt.

Es gibt sowohl Absauggeräte, die fest eingebaut sind, als auch mobile Absauggeräte. Absauggeräte mit auswechselbaren Filterkassetten haben den Vorteil, dass ein beladenes Filter schnell und einfach gegen ein neues Filter ausgetauscht werden kann, so dass das Gerät sehr schnell wieder zur Verfügung steht. Solche Absauggeräte sind z.B von Dokument US-A-5837040 bekannt.

Zum Wechseln der Filterkassette muss das Saugrohr abgenommen, das Gerät geöffnet und dann die Filterkassette entnommen werden. Dabei besteht die Gefahr, dass Schadstoffpartikel, die vom Filter adsorbiert wurden, aus dem Lufteinlass der Filterkassette herausfallen und wieder in die Umgebungsluft gelangen. In kritischen Fällen und besonders dann, wenn giftige Stoffe, Pilze oder gar Krankheitserreger aufgefangen wurden, muss das Absauggerät zum Filterwechsel zuerst an einen anderen Ort gebracht werden, bevor die Filterkassette entnommen wird.

Angesichts dieser Problematik stellt sich die Aufgabe, beim Filterwechsel auf einfache Weise sicherzustellen, dass keine Schadstoffpartikel freigesetzt werden.

Gelöst wird die Aufgabe durch ein Absauggerät mit den im Anspruch 1 angegebenen Merkmalen.

Erfindungsgemäß umgibt ein flexibler, auseinander ziehbarer Schutzschlauch den Lufteinlass der Filterkassette und ist gleichzeitig auf das Ende des Saugrohrs aufgeschoben. Wird das Saugrohr abgekoppelt, kann sich der Schutzschlauch ein Stück auseinander ziehen, so dass er die Trennstelle überspannt. Der Schutzschlauch kann dann über dem offenen Lufteinlass abgebunden werden, so dass der Lufteinlass weiterhin staubdicht von der Umgebung abgeschirmt ist, obwohl das Saugrohr abgekoppelt ist. Der Schutzschlauch kann anschließend oberhalb der Abbindestelle abgeschnitten werden. Der abgeschnittene Rest kann anschließend vom Saugrohr entfernt werden. Der am Ende abgebundene und damit verschlossene Teil des Schutzschlauchs verbleibt an der Filterkassette und verschließt deren Lufteinlass dauerhaft, so dass keine Schadstoffpartikel entweichen können. Der Luftauslass der Filterkassette muss nicht verschlossen werden, da dorthin keine Schadstoffpartikel gelangen. Die beladene und sicher verschlossene Filterkassette kann aus dem Absauggerät entnommen werden, ohne dass es zu einer Kontamination der Umgebung kommt.

Bevorzugt ist der Schutzschlauch in axialer Richtung zusammengefaltet. Sobald das Saugrohr von der Filterkassette abgekoppelt und ein Stück entfernt wird, ziehen sich diese Falten auseinander, und der Schutzschlauch wird länger. Die Länge, bis zu der der Schutzschlauch mindestens auseinander ziehbar sein muss, hängt vom Durchmesser des zu verschließenden Lufteinlasses ab. Nach dem Trennen des Schutzschlauchs bei abgekoppeltem Saugrohr muss das an der Filterkassette verbleibende Stück zumindest so lang sein, dass es über dem Lufteinlass abgebunden werden und dessen Querschnitt gut abdecken kann.

Als Material für den Schutzschlauch hat sich Kunststofffolie, beispielsweise Polyethylen, oder ein dünnes Kunststoffgewebe bewährt. Das Trennen des Schlauches und das anschließende Verschließen des Lufteinlasses kann dann mit einem Werkzeug erfolgen, wie es beim Verschweißen von Folientüten benutzt wird: Ein beheizter Metalldraht schneidet dabei die Wandung des Schlauches durch und verschweißt gleichzeitig die entstehenden Enden luftdicht miteinander. Alternativ kann der Schlauch aber auch einfach von Hand abgebunden und danach abgeschnitten werden.

Der Durchmesser des Schutzschlauchs muss zumindest etwas größer sein als der Außendurchmesser des Saugrohrs, auf das der Schlauch aufgeschoben wird. Der Schlauch kann vorteilhaft konisch ausgebildet sein, wobei der größte Durchmesser bevorzugt am Saugrohr ist. Dadurch wird das Aufschieben auf das Saugrohr erleichtert.

Der Lufteinlass an der Kassette ist im einfachsten Fall eine runde Öffnung, in die das Ende des Saugrohrs eingesteckt wird. Bevorzugt ist der Lufteinlass aber als Anschlussstutzen ausgebildet, in den das Saugrohr ein Stück eingeschoben wird. In diesem Fall ist dann der Schutzschlauch über die jeweiligen Enden des Anschlussstutzens bzw. des Saugrohrs übergestülpt.

Das erfindungsgemäße Absauggerät und dessen Funktion werden nachstehend anhand der beigefügten Zeichnungen beispielhaft erläutert. Es zeigen:
- Figur 1a: ein Absauggerät mit noch nicht vollständig angekoppeltem Saugrohr, in einem vereinfachten Schnittbild;
- Figur 1b: das Absauggerät von Fig. 1a mit vollständig angekoppeltem Saug- rohr;
- Figur 2a: das Abkoppeln des Saugrohrs und die Funktion des Schutzschlauchs, schematisch;
- Figur 2b: die Funktion des Schutzschlauchs nach dem Abkoppeln des Saug- rohrs, schematisch.

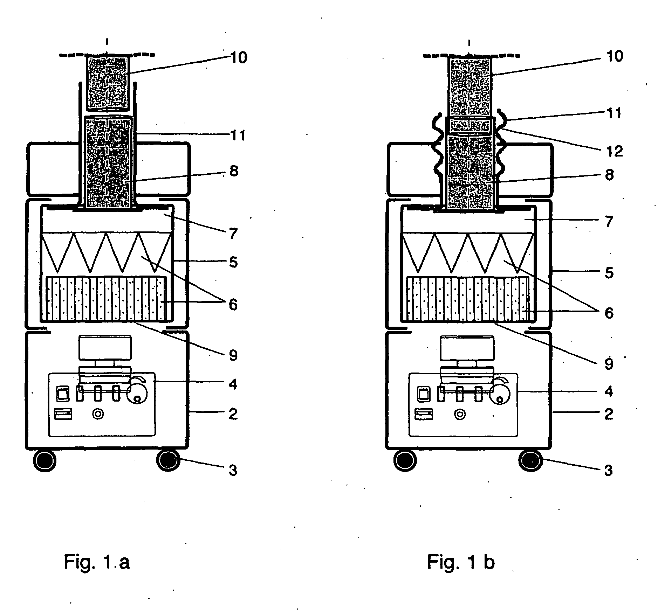

Das in Figur 1a zu sehende Absauggerät 1 hat ein rechteckiges Gehäuse 2, das an seiner Unterseite Rollen 3 trägt. Im unteren Teil des Gehäuses 2 ist ein Sauggebläse 4 eingebaut. Im mittleren Teil des Gehäuses 2 sitzt eine auswechselbare Filterkassette 5 mit rundem Querschnitt. Im unteren Teil der Filterkassette 5 sitzt ein feinporiges Filter 6, darüber befindet sich ein Luftverteilraum 7, der in einen runden Anschlussstutzen 8 übergeht. An der Unterseite der Filterkassette 5 ist eine Luftauslassöffnung 9 vorgesehen.

Ein Saugrohr 10 ist auf den Anschlussstutzen 8 aufsteckbar. Ein Schutzschlauch 11, der aus dünner Kunststofffolie besteht ist mit der Oberseite der Filterkassette 5 fest und luftdicht verbunden und umhüllt den Anschlussstutzen 8 konzentrisch. Das freie Ende des Schutzschlauchs 11 ist auf das Saugrohr 10 aufgeschoben, von dem hier nur das untere Ende zu sehen ist.

Bei eingeschaltetem Sauggebläse 4 wird Luft und die darin enthaltenen Schadstoffpartikel durch das Saugrohr 10 angesaugt und gelangt über den Anschlussstutzen 8 in den Luftverteilraum 7. Anschließend durchströmt die kontaminierte Luft das Filter 6, wobei die Schadstoffpartikel adsorbiert werden. Die gefilterte partikelfreie Luft strömt durch die Luftauslassfläche 9 in den unteren Teil des Gehäuses 2 und von dort ins Freie.

In Fig. 1 b steckt das untere Ende des Saugrohrs 10 in dem Anschlussstutzen 8. Dadurch ist das Saugrohr 10 luft- und staubdicht an die Filterkassette 5 angekoppelt. Der dünne und flexible Schutzschlauch 11, dessen oberes Ende an dem Saugrohr 10 dicht anliegt, hat sich in axialer Richtung ein Stück zusammengeschoben, wodurch sich Falten 12 gebildet haben.

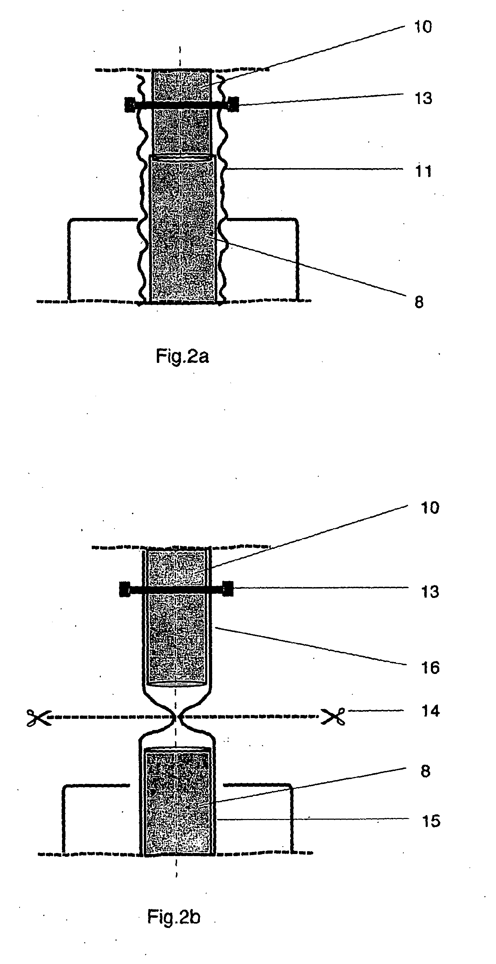

Wie in Fig. 2a zu sehen, sorgt ein Klemmring 13 dafür, dass der Schutzschlauch 11 luft- und staubdicht an der Außenwand des Saugrohres 10 anliegt. In Fig. 2a ist der Schutzschlauch 11 noch faltenlos straff, da das Saugrohr 10 zwar bereits auf dem Anschlussstutzen 8 aufsitzt, aber noch nicht vollständig in diesen eingeschoben ist.

Zum Wechseln der Filterkassette 5 wird zunächst das Saugrohr 10 abgekoppelt, in dem es nach oben aus dem Anschlussstutzen 8 herausgezogen wird, wie das in Fig. 2b zu sehen ist. Dabei entfaltet sich der Schutzschlauch 11, wobei sich die Falten 12 glätten. Der Schutzschlauch 11 lässt sich so weit verlängern, bis die Falten 12 verschwunden sind. Dadurch wird es möglich, dass das Saugrohr 10 aus dem Anschlussstutzen 8 vollständig herausgezogen werden kann, während gleichzeitig der Schutzschlauch 11 sowohl mit dem Saugrohr 10 als auch mit dem Anschlussstutzen 8 luftdicht verbunden bleibt. Der Schutzschlauch 11 bildet also eine Hülle um die Anschlussstelle zwischen Anschlussstutzen 8 und Saugrohr 10, die verhindert, dass Schadstoffpartikel aus der Filterkassette 5 freigesetzt werden.

Der axial auseinander gezogene Schutzschlauch 11 kann oberhalb des Anschlussstutzens 8 abgebunden und anschließend getrennt werden. Dabei liegt die Trennebene 14 so weit über dem Ende des Anschlussstutzens 8, dass dieser von dem abgebundenen Teil 15 des Schutzschlauches 11 partikeldicht verschlossen wird. Der abgetrennte Rest 16 kann von dem Saugrohr 10 entfernt werden, nachdem der Klemmring 13 gelöst wurde.

### Liste der Bezugszeichen

- 1: Absauggerät
- 2: Gehäuse
- 3: Rolle
- 4: Sauggebläse
- 5: Filterkassette
- 6: Filter
- 7: Luftverteilraum
- 8: Anschlussstutzen
- 9: Luftauslassöffnung
- 10: Saugrohr
- 11: Schutzschlauch
- 12: Falten (von 11)
- 13: Klemmring
- 14: Trennebene
- 15: Teil (von 11)
- 16: Rest (von 11)

## Patentansprüche

1. Absauggerät zum Absaugen von Schadstoffpartikeln aus der Luft, mit
- einem Sauggebläse;
- einem Saugrohr;
- einer auswechselbaren Filterkassette mit einem Lufteinlass, einer Luftauslassöffnung und einem Filter;
**dadurch gekennzeichnet, dass**
- das Saugrohr (10) an den Lufteinlass der Filterkassette (5) ankoppelbar ist;
- ein flexibler, auseinander ziehbarer Schutzschlauch (11) mit seinem einen Ende mit der Filterkassette (5) so verbunden ist, dass er den Lufteinlass umgibt, und mit seinem anderen Ende auf das Saugrohr (10) aufgeschoben ist.

2. Absauggerät nach Anspruch 1, **dadurch gekennzeichnet, dass** der Schutzschlauch (11) bei angekoppeltem Saugrohr (10) in axialer Richtung zusammen gefaltet ist.

3. Absauggerät nach Anspruch 1 oder 2, **dadurch gekennzeichnet, dass** der Schutzschlauch (11) aus Kunststofffolie oder dünnem Kunststoffgewebe besteht.

4. Absauggerät nach einem der Ansprüche 1 bis 3, **dadurch gekennzeichnet, dass** der Schutzschlauch (11) konisch ausgebildet ist.

5. Absauggerät nach Anspruch 4, **dadurch gekennzeichnet, dass** der größte Durchmesser des Schutzschlauchs (11) am Saugrohr (10) ist.

6. Sauggerät nach einem der Ansprüche 1 bis 5, **dadurch gekennzeichnet, dass** der Lufteinlass der Filterkassette (5) als Anschlussstutzen (8) ausgebildet ist, in den das Saugrohr (10) einsteckbar ist.

## Claims

1. A suction device for suctioning contaminant particles from the air, comprising
- a suction fan;
- a suction pipe;
- a replaceable filter cassette comprising an air inlet, an air outlet opening and a filter;
**characterised in that**
- the suction pipe (10) may be coupled to the air inlet of the filter cassette (5);
- a flexible protective tube (11) which may be stretched out is connected with its one end to the filter cassette (5) so that it surrounds the air inlet and with its other end is pushed onto the suction pipe (10).

2. The suction device according to Claim 1, **characterised in that** the protective tube (11) is folded up in the axial direction when the suction pipe (10) is connected.

3. The suction device according to Claim 1 or 2, **characterised in that** the protective tube (11) consists of plastic foil or thin plastic fabric.

4. The suction device according to one of Claims 1 to 3, **characterised in that** the protective tube (11) is of conical configuration.

5. The suction device according to Claim 4, **characterised in that** the greatest diameter of the protective tube (11) is on the suction pipe (10).

6. The suction device according to one of Claims 1 to 5, **characterised in that** the air inlet of the filter cassette (5) is configured as a connector (8) into which the suction pipe (10) may be inserted.

## Revendications

1. Aspirateur pour aspirer des particules de substances nocives dans l'air, avec
- un extracteur ;
- un tube d'aspiration ;
- une cassette filtrante interchangeable, avec une entrée d'air, un orifice de sortie d'air et un filtre,
**caractérisé en ce que**
- le tube d'aspiration (10) peut s'accoupler sur l'entrée d'air de la cassette filtrante (5) ;
- un flexible de protection (11) étirable est relié par l'une de ses extrémités sur la cassette filtrante (5), de sorte à entourer l'entrée d'air, et **en ce que** par son autre extrémité, il est emboîté sur le tube d'aspiration (10).

2. Aspirateur selon la revendication 1, **caractérisé en ce que**, lorsque le tube d'aspiration (10) est accouplé, le flexible de protection (11) est replié en direction axiale.

3. Aspirateur selon la revendication 1 ou 2, **caractérisé en ce que** le flexible de protection (11) consiste dans un film en matière plastique ou dans une structure en matière plastique.

4. Aspirateur selon l'une quelconque des revendications 1 à 3, **caractérisé en ce que** le flexible de protection (11) est conçu sous forme conique.

5. Aspirateur selon la revendication 4, **caractérisé en ce que** le plus grand diamètre du tube de protection (11) se situe sur le tube d'aspiration (10).

6. Aspirateur selon l'une quelconque des revendications 1 à 5, **caractérisé en ce que** l'entrée d'air de la cassette filtrante (5) est conçue sous la forme d'un raccord (8) dans lequel le tube d'aspiration (10) est enfichable.
